# EUROPEAN PATENT SPECIFICATION

(11) **EP 3 349 894 B1**
(45) Date of publication and mention of the grant of the patent: **10.07.2019**
(21) Application number: 16794085.7
(22) Date of filing: 27.07.2016
(51) Int. Cl.: C01F 7/36, C01F 7/44, C10G 45/08, C10G 45/00, B01J 21/04, B01J 35/10, C10G 47/12, B01J 21/02, C01F 7/00, B01J 37/03, B01J 35/02

(54) **A METHOD FOR PRODUCTION OF A CATALYST SUPPORTING MATERIAL**
VERFAHREN ZUR HERSTELLUNG EINES KATALYSATORTRÄGERMATERIALS
PROCÉDÉ DE PRODUCTION D'UN MATÉRIAU SUPPORT DE CATALYSEUR

(30) Priority: 18.09.2015 TR 201511712
(43) Date of publication of application: 25.07.2018
(73) Proprietor: Turkiye Petrol Rafinerileri A.S. Tupras, 41780 Korfez/Kocaeli (TR)
(72) Inventor: GUMRUK, Esra, 34775 Umraniye/Istanbul (TR); SECKIN, Oznur Cansu, Bahcesehir/Istanbul (TR); TEKE, Yesim, Sisli/Istanbul (TR); AKIN, Ayse Nilgun, 41380 Izmit/Kocaeli (TR); OZCAN, Orhan, 41380 Izmit/Kocaeli (TR); KIBAR, Murat Efgan, 41380 Izmit/Kocaeli (TR)
(74) Representative: Cayli, Hülya
(86) International application number: PCT/TR2016/000103
(87) International publication number: WO 2017/048205

(56) References cited:
- WO-A1-2015/064385
- WO-A1-2015/083498
- F Dumeignil ET AL: "Synthesis of high surface area boria-alumina mixed oxides characterization by 11B- and 27Al-NMR", Colloids and Surfaces A: Physicochemical and Engineering Aspects, 1 January 1999 (1999-01-01), pages 75-81, XP055339739, Retrieved from the Internet: URL:http://www.sciencedirect.com/science/a rticle/pii/S0927775799001338/pdfft?md5=0ba 4b27fbaae784e9172dc36695f76c5&pid=1-s2.0-S 0927775799001338-main.pdf [retrieved on 2017-01-27]
- KIBAR MURAT EFGAN ET AL: "Optimization, modeling and characterization of sol-gel process parameters for the synthesis of nanostructured boron doped alumina catalyst supports", MICROPOROUS AND MESOPOROUS MATERIALS, ELSEVIER, AMSTERDAM, NL, vol. 229, 25 April 2016 (2016-04-25), pages 134-144, XP029550204, ISSN: 1387-1811, DOI: 10.1016/J.MICROMESO.2016.04.022

## Description

### Field of the Invention

The present invention relates to a method for production of a boron-doped alumina catalyst supporting material.

### Background Art

Hydro processing is a process used for cracking of low-value heavy hydrocarbons at high temperatures and pressures in refineries using hydrogen and a catalyst so as to convert them into high-value intermediates (i.e. diesel oil, jet fuel etc.). In hydro processing catalysts, molybdenum (Mo) or tungsten (W) metals are charged on aluminum oxide (Al₂O₃) supporting material together with cobalt (Co) or nickel (Ni), Although aluminum oxide may alone be used as a supporting material, the catalyst may be improved and synthesized with alkaline metals such as sodium (Na), lithium (Li), calcium (Ca), magnesium (Mg). Today, in order to increase performance of the catalyst, such supporting materials as silica-alumina, zeolite, titanium dioxide (TiOs) may be used, in addition to the above. In the said catalyst, hydro processing activity is increased by using boron compounds and use of boron in the catalyst supporting material has a positive effect on the acid density of the catalyst. In addition to the content of the materials used in the catalysts, structural features of the catalyst (i.e. surface area, porosity size etc.) are also important parameters effecting performance of the reactor.

Hydro processing applications are categorized under two main headings: hydrotreating (HT) and hydrocracking (HC). Conventional methods for preparing hydro processing catalysts may be classified as impregnation, co-precipitation and sol-gel method. US6174432B1 discloses a hydrogenation catalyst with a boron-containing alumina support and a method for preparation of the same. Surface area of the disclosed catalyst is from 70 to 130 m²/g and said boron-alumina support material is obtained by metal impregnation.

US 3,993,557 discloses a catalyst support material comprised of boron and alumina particularly useful in hydrocracking reactions. It is specified that the resulting metal impregnated catalyst had a surface area of 367 m2/g at most. The document titled "Synthesis of high surface area boria-alumina mixed oxides characterization by IIB- and 27AI-NMR" (F Dumeignil et. al) discloses a method for the production of a boron-doped alumina catalyst supporting material for a catalyst that is suitable for use in a hydroprocessing application. This method comprises the steps of mixing aluminum-tri-sec butoxide (ASB) and 2-butanol in order to obtain a solution such that the molarity of aluminum alkoxide in a mixing medium is 0.4-1; heating the said solution to a temperature of 85°C (reflux at 85°C); adding into the heated solution a solution of (NH4)2B407AH20 dissolved in water such that a mol ratio of 1 of water to aluminum alkoxide is obtained; cooling the mixture, with stirring for 1 hour, to room temperature in order to obtain a gel; ageing the gel mixture by keeping it at room temperature for 1 hour; drying the aged mixture at 100o C for 24 hours in order to obtain a particulate; calcining the resulting particulate at 500°C for 3 hours in order to obtain a boron-doped alumina catalyst supporting material.

### Brief Description of the Invention

With the present invention, there is provided a method for production of a boron-doped alumina catalyst supporting material. Said method of production comprises the steps of mixing aluminum alkoxide and a C1-C4 alcohol, such as 1-propanol in order to obtain a solution such that the molarity of aluminum alkoxide in the mixing medium is 0.4-1; heating the said solution to a temperature of 25-85°C; adding into the heated solution a solution of sodium tetraborate decahydrate dissolved in water; adding nitric acid into the resulting mixture in a mol ratio of 0.1-0.9 of nitric acid to aluminum alkoxide; cooling the nitric acid added mixture, with stirring for 1-6 hours, to room temperature by means of a condenser system in order to obtain a gel; aging the gel mixture by keeping it at room temperature for 48 hours; drying the aged mixture at 100°C for 24 hours in order to obtain a particulate; calcinating the particulate at 500°C for 3 hours in order to obtain a boron-doped alumina catalyst supporting material.

In the production method according to the present invention, it is ensured that the resulting catalyst supporting material has the desired reaction surface contact area and porosity diameters, since the parameters affecting the synthesis are selected at optimum values. Thus, the profitability of the process is increased that uses the resulting catalyst supporting material.

### Object of the Invention

An object of the present invention is to provide a method for production of a catalyst supporting material suitable for use in hydro processing reactions.

Another object of the present invention is to provide a method for production of a catalyst supporting material with a large reaction surface contact area and optimum porosity diameters.

Another object of the present invention is to provide a method for production of a catalyst supporting material for use in a catalyst that increases the efficiency of the reaction where it is used and the profitability of the process.

### Description of the Drawings

The exemplary embodiments of the method for production of a catalyst supporting material according to the present invention are illustrated in the accompanying drawings, in which:
Figure 1 is a scanning electron microscope view of a γ-alumina catalyst supporting material, captured at 100 nm and 1000 nm.
Figure 2 is a scanning electron microscope view of the boron-doped alumina catalyst supporting material containing 1% boron by weight, captured at 100 nm and 1000 nm.
Figure 3 is a scanning electron microscope view of the boron-doped alumina catalyst support material containing 5% boron by weight, captured at 100 nm and 1000 nm.

### Description of the Invention

In hydro processing reactions performed in refineries, intermediate products such as diesel oil, jet fuel etc. are obtained while at the same time sulphur, nitrogen, oxygen and metal content of the said products is reduced and the reaction rate is increased by using a catalyst during the said process. For the catalyst to present a more effective activation, the reaction area of the catalyst must be large and the volume and diameter of the pores on the catalyst must be at suitable values for reaction. Addition of boron compounds into hydro processing catalysts ensures that acid density and strength of the catalyst supporting material is increased, hydrocracking activity is increased, surface area and pore diameters of the catalyst are increased, sulphur and nitrogen is decreased by using hydrogen, and other metals charged on the catalyst such as molybdenum and cobalt are distributed homogenously on the surface of the catalyst. In the event that the supporting material contains alumina, use of boron in the catalyst has a positive effect on acid density and number. It is known that modification of catalyst active surface with boron compounds increases the surface area of the catalyst. Therefore, with the present invention, there is provided a method for production of a boron-doped alumina catalyst supporting material to use in a catalyst which is suitable for use in hydro processing reactions.

The method of production according to the present invention comprises mixing aluminum alkoxide and C1-C4 alcohol, such as 1-propanol in order to obtain a solution such that the molarity of aluminum alkoxide in a mixing medium is 0.4-1; heating the said solution to a temperature of 25-85°C; adding into the heated solution a solution of sodium tetraborate decahydrate dissolved in water, preferably by dropping method, such that a mol ratio of 15-100 of water to aluminum alkoxide is obtained; adding nitric acid (HNO₃) into the resulting mixture in a mol ratio of 0.1-0.9 of nitric acid to aluminum alkoxide; cooling the nitric acid added mixture, with stirring for 1-6 hours (preferably 6 hours), to room temperature (25°C) by means of a condenser system in order to obtain a gel: aging the gel mixture by keeping it at room temperature for 48 hours: drying the aged mixture at 100°C for 24 hours in order to obtain a particulate; calcinating the particulate at 500°C for 3 hours in order to obtain a boron-doped alumina catalyst supporting material.

In one alternative embodiment of the invention, preferably, aluminum isopropoxide is used as aluminum alkoxide. Furthermore, preferred concentration of the boron source, preferably sodium tetraborate decahydrate solution to be used is associated with the boron content in the synthesized supporting material. Therefore, since the synthesized supporting material contains 1-5% boron by weight. i.e. B₂O₃/Al₂O₃ ratio-0.01-0.05, concentration of the boron source, preferably sodium tetraborate decahydrate solution is calculated and prepared based on the proportion of boron used.

In the production method according to the present invention, in the step of stirring aluminum alKoxide and the boron source, preferably sodium tetraborate decahydrate solutions at room temperature in order to obtain a gel, hydrolysis reactions take place. In this hydrolysis reaction, nitric acid serves as a catalyst. Nitric acid is added to provide an acidic medium required for condensation reactions, During the hydrolysis process, since cooling is performed by means of a condenser system, it is also prevented that water is removed from the medium during the reaction. When hydrolysis is completed, a mixture of boron, alumina and a solvent is obtained. Said drying process enables that the solvent is removed from the mixture, Thus, boron-doped alumina mixture consisted of boron and alumina is subjected to calcination, whereby production of the catalyst supporting material is completed.

### Example 1:

In the experimental studies performed within the upper and lower limits specified in the invention, process steps are exemplified for preparing a boron-alumina supporting material using the following data;

### Experimental data;

- 1% boron content by weight,
- mol H₂O/mol AlP 15,
- aluminum isopropoxide molarity 1 M
- mol nitric acid (HNO₃) / mol aluminum alkoxide ratio 0.1.

### Process steps for synthesizing boron-doped alumina supporting material:

- dissolving 0.5 mol aluminum isopropoxide used as aluminum alkoxide in 500 ml of solvent and heating the resulting solution to 85°C with stirring,
- when the desired temperature is achieved, dissolving 0.7 g of sodium tetraborate decahydrate in 135 ml water and feeding the resulting aqueous solution to the system at 10 rpm,
- to the resulting mixture, adding 3.15 g of nitric acid (HNO₃) and allowing it to cool down,
- stirring the solution for 6 hours after the hydrolysis reactions are initiated,
- allowing the mixture cooled down to room temperature and had a gel form for 48 hours for aging in order to remove the solvent and water remnant in the mixture,
- after the step of aging, allowing the mixture to dry at 100°C for 24 hours,
- calcinating the resulting powder material at 500°C for 3 hours and obtaining a boron-doped alumina supporting material.

In one other alternative embodiment of the invention, instead of sodium tetraborate decahydrate, used as a boron source to prepare a catalyst supporting material, preferably, sodium metaborate, boron oxide and boric acid may be used. Furthermore, the solvents to be used are inert against the reactants, which preferably consist of organic solvents such as C₁-C₄ alcohol, propanol, butanol and ethanol. In the synthesis of alumina, aluminum sec-butoxide and aluminum iso-butoxide preferably are also used as an alumina source, apart from aluminum isopropoxide.

Structural features (surface area and pore size) of various supporting materials produced by method of the present invention are determined through nitrogen adsorption/desorption isotherms. Data on the surface area measured by BET (Brunauer-Emmett-Teller) method in BET surface area analysis and data on desorption average pore size measured by BJH (Barret-Joyner-Hatenda) method in pore size and structure analysis are presented in Table 1.

| | **Surface area (m²/g)** | **Desorption average pore size (nm)** |
|---|---|---|
| **Expt. 1** | 328.130 | 41.808 |
| **Expt. 2** | 288.180 | 51.579 |
| **Expt. 3** | 404.190 | 7.451 |
| **Expt. 4** | 494.940 | 133.154 |
| **Expt. 5** | 283.050 | 44.669 |
| **Expt. 6** | 310.460 | 5.434 |
| **Expt. 7** | 340.990 | 5.087 |
| **Expt. 8** | 307.000 | 4.041 |
| **Expt. 9** | 423.630 | 126.388 |
| **Expt. 10** | 315.410 | 41.016 |
| **Expt 11** | 302.380 | 36.098 |
| **Expt. 12** | 319.910 | 41.931 |
| **Expt. 13** | 248.640 | 43.886 |
| **Expt. 14** | 328.680 | 86.561 |
| **Expt. 15** | 303.460 | 49.273 |
| **Expt. 16** | 266.380 | 29.472 |
| **Expt. 17** | 351.100 | 10.301 |
| **Expt. 18** | 538.680 | 94.834 |
| **Expt. 19** | 287.060 | 32.365 |
| **Expt. 20** | 348.040 | 66.725 |
| **Expt. 21** | 261.740 | 30.156 |
| **Expt. 22** | 284.100 | 2.967 |
| **Expt. 23** | 398.580 | 42.848 |
| **Expt. 24** | 287.690 | 31.796 |
| **Expt. 25** | 271.540 | 30.185 |
| **Expt. 26** | 324.610 | 5.624 |
| **Expt. 27** | 254.890 | 29.239 |
| **Expt. 28** | 284.220 | 29.804 |
| **Expt. 29** | 278.260 | 29.645 |
| **Expt. 30** | 287.300 | 29.978 |

As it is apparent from the experimental results, maximum surface area and pore size of the synthesized catalyst supporting material are 538.680 m²/g and 94.834 nm, respectively. The supporting material of the invention has a quite high surface area and pore size as compared to the prior art applications.

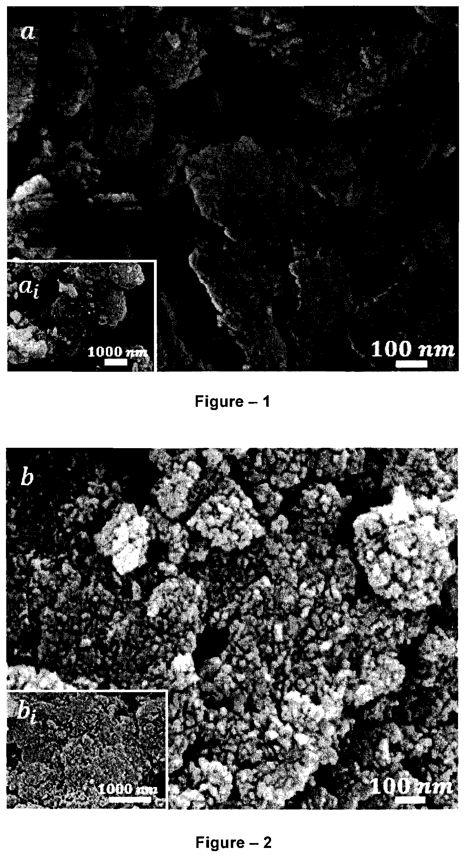

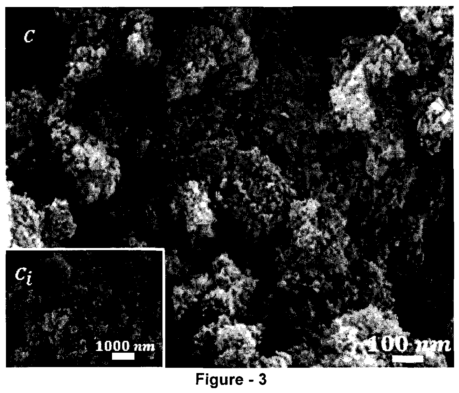

Figures 1-3 present scanning electron microscope (SEM) images wherein structural changes in the boron-doped aluminum supporting material, resulting from an increase in the amount of boron, are inspected through the experiments with the same preparation conditions as the supporting materials prepared according to the test matrix (mol H2O/mol AIP=15, aluminum isopropoxide molarity=1 M, mol nitric acid (HNO₃) / mol aluminum isopropoxide (AIP) ratio=0.1). Figure 1. 2 and 3 respectively show scanning electron microscope images of γ-alumina (0% boron content) supporting material, boron-doped alumina supporting material containing 1% boron by weight and boron-doped alumina supporting material containing 5% boron by weight, captured at 100 nm and 1000 nm. Particle size resulting from hydrolysis and condensation reactions performed in sol-gel preparation is "γ-Al₂O₃ (0% boron content) (1000-2500 nm)"> "boron-doped alumina supporting material containing 1% boron by weight (10-200 nm)">"boron-doped alumina supporting material containing 5% boron by weight (10 nm > P)", based on the images ai, bi and ci in Figures 1-3. When the surface morphology is examined, it is seen that as the boron content is increased, a nano-spherical structure is formed. In addition, if the boron amount is increased, smaller nano-spheres (d < 10 nm) are obtained (Figure 3)- It is observed that an increase in the boron amount is also effective in formation of a porous structure, in addition to the surface area, The presence of boron increases formation of nano-spheres during the formation of a supporting material, thereby increasing the surface area.

Consequently, in the production method according to the present invention, particularly because the synthesis parameters are selected to be at optimum values, a catalyst supporting material is achieved with a large reaction surface contact area and with pore diameters suitable for reaction. Thus, it is ensured that the catalyst using the resulting catalyst supporting material is operated more efficiently and the profitability of the unit is increased where the catalyst is used.

## Claims

1. A method for production of a boron-doped alumina catalyst supporting material for a catalyst that is suitable for use in a hydro processing application, **characterized by** comprising the steps of:
- mixing aluminum alkoxide and C₁-C₄ alcohol in order to obtain a solution such that the molarity of aluminum alkoxide in a mixing medium is 0.4-1;
- heating the said solution to a temperature of 25-85°C;
- adding into the heated solution a solution of a boron source selected from sodium tetraborate decahydrate, sodium metaborate, boron oxide and boric acid dissolved in water such that a mol ratio of 15-100 of water to aluminum alkoxide is obtained;
- adding nitric acid into the resulting mixture in a mol ratio of 0.1-0.9 of nitric acid to aluminum alkoxide;
- cooling the nitric acid added mixture, with stirring for 1-6 hours, to room temperature in order to obtain a gel;
- aging the gel mixture by keeping it at room temperature for 48 hours;
- drying the aged mixture at 100°C for 24 hours in order to obtain a particulate;
- calcinating the resulting particulate at 500°C for 3 hours in order to obtain a boron-doped alumina catalyst supporting material in which the boron content of the synthesized boron-doped alumina catalyst supporting material is 1-5% by weight.

2. A production method according to claim 1, **characterized in that** the step of adding into the heated solution a solution of sodium tetraborate decahydrate dissolved in water is performed by dropping method.

3. A production method according to claim 1, **characterized in that** in the step of cooling the nitric acid added mixture, with stirring for 1-6 hours, to room temperature in order to obtain a gel, a condenser system is used.

4. A production method according to claim 1, **characterized in that** aluminum isopropoxide is used as aluminum alkoxide.

5. A production method according to claim 1, **characterized in that** C₁-C₄ alcohol is methanol.

6. A production method according to claim 1, **characterized in that** C₁-C₄ alcohol is ethanol.

7. A production method according to claim 1, **characterized in that** C₁-C₄ alcohol is propanol.

8. A production method according to claim 1, **characterized in that** C₁-C₄ alcohol is butanol.

9. A production method according to claim 7, **characterized in that** C₁-C₄ alcohol is 1-propanol.

10. A production method according to claim 1, **characterized in that** the boron source is sodium tetraborate decahydrate.

11. A production method according to claim 1, **characterized in that** the boron source is sodium metaborate.

12. A production method according to claim 1, **characterized in that** the boron source is boron oxide.

13. A production method according to claim 1, **characterized in that** the boron source is boric acid.

## Patentansprüche

1. Verfahren zur Herstellung von mit Bor dotiertem Aluminiumoxidkatalysator-Trägermaterial für einen Katalysator, der zur Anwendung beim Hydroprozessieren geeignet ist, **dadurch gekennzeichnet, dass** das Verfahren die Schritte aufweist:
- Mischen von Aluminiumalkoxid und C₁-C₄-Alkohol, um eine Lösung zu erhalten, sodass die Molarität des Aluminiumalkoxids in einem gemischten Medium 0,4-1 ist,
- Erwärmen der Lösung auf eine Temperatur von 25-85°C,
- Hinzugeben zu der erwärmten Lösung einer Lösung einer Borquelle ausgewählt aus Natriumtetraborat-Decahydrat, Natriumtetraborat, Boroxid und Borsäure gelöst in Wasser, sodass ein Molverhältnis von 15-100 von Wasser zu Aluminiumalkoxid erhalten wird,
- Hinzufügen von Salpetersäure in das resultierende Gemisch in einem Molverhältnis von 0,1-0,9 von Salpetersäure zu Aluminiumalkoxid,
- Kühlen des Gemisches, dem Salpetersäure hinzugefügt wurde, unter Rühren für 1-6 Stunden auf Zimmertemperatur, um ein Gel zu erhalten,
- Altern lassen des Gelgemisches, indem es für 48 Stunden auf Zimmertemperatur gehalten wird,
- Trocknen des gealterten Gemischs bei 100°C für 24 Stunden, um partikelförmiges Material zu erhalten,
- Kalzinieren des resultierenden teilchenförmigen Materials bei 500°C für 3 Stunden, um ein mit Bor dotiertes Aluminiumoxidkatalysator-Trägermaterial zu erhalten, in dem der Borgehalt des synthetisierten mit Bor dotierten Aluminiumoxidkatalysator-Trägermaterials 1-5 Gew.-% beträgt.

2. Herstellungsverfahren nach Anspruch 1, **dadurch gekennzeichnet, dass** der Schritt des Hinzufügens einer Lösung von Natriumtetraborat-Decahydrat gelöst in Wasser in die erwärmte Lösung durch ein Tropfverfahren durchgeführt wird.

3. Herstellungsverfahren nach Anspruch 1, **dadurch gekennzeichnet, dass** beim Schritt des Kühlens des Gemisches, dem Salpetersäure hinzugefügt wurde, unter Rühren für 1-6 Stunden auf Zimmertemperatur, um ein Gel zu erhalten, ein Kondensationssystem verwendet wird.

4. Herstellungsverfahren nach Anspruch 1, **dadurch gekennzeichnet, dass** Aluminiumisopropoxid als Aluminiumalkoxid verwendet wird.

5. Herstellungsverfahren nach Anspruch 1, **dadurch gekennzeichnet, dass** der C₁-C₄-Alkohol Methanol ist.

6. Herstellungsverfahren nach Anspruch 1, **dadurch gekennzeichnet, dass** der C₁-C₄-Alkohol Ethanol ist.

7. Herstellungsverfahren nach Anspruch 1, **dadurch gekennzeichnet, dass** der C₁-C₄-Alkohol Propanol ist.

8. Herstellungsverfahren nach Anspruch 1, **dadurch gekennzeichnet, dass** der C₁-C₄-Alkohol Butanol ist.

9. Herstellungsverfahren nach Anspruch 7, **dadurch gekennzeichnet, dass** der C₁-C₄-Alkohol 1-Propanol ist.

10. Herstellungsverfahren nach Anspruch 1, **dadurch gekennzeichnet, dass** die Borquelle Natriumtetraborat-Decahydrat ist.

11. Herstellungsverfahren nach Anspruch 1, **dadurch gekennzeichnet, dass** die Borquelle Natriummetaborat ist.

12. Herstellungsverfahren nach Anspruch 1, **dadurch gekennzeichnet, dass** die Borquelle Boroxid ist.

13. Herstellungsverfahren nach Anspruch 1, **dadurch gekennzeichnet, dass** die Borquelle Borsäure ist.

## Revendications

1. Procédé de production d'un matériau de support de catalyseur d'alumine dopé au bore pour un catalyseur qui convient à une utilisation dans une application d'hydrotraitement, **caractérisé en ce qu'**il comprend les étapes consistant à :
- mélanger un alkoxyde d'aluminium et un alcool en C₁-C₄ afin d'obtenir une solution telle que la molarité de l'alkoxyde d'aluminium dans un milieu de mélange soit de 0,4-1 ;
- chauffer ladite solution à une température de 25-85 °C ;
- ajouter à la solution chauffée une solution d'une source de bore sélectionnée parmi le tétraborate de sodium décahydraté, le métaborate de sodium, l'oxyde de bore et l'acide borique dissous dans de l'eau de sorte que l'on obtienne un rapport molaire de 15-100 d'eau à l'alkoxyde d'aluminium ;
- ajouter de l'acide nitrique au mélange obtenu dans un rapport molaire de 0,1-0,9 d'acide nitrique à l'alkoxyde d'aluminium ;
- refroidir le mélange additionné d'acide nitrique sous agitation pendant 1-6 heures à température ambiante afin d'obtenir un gel ;
- vieillir le mélange de gel en le maintenant à température ambiante pendant 48 heures ;
- sécher le mélange vieilli à 100 °C pendant 24 heures afin d'obtenir une substance particulaire ;
- calciner la substance particulaire obtenue à 500 °C pendant 3 heures afin d'obtenir un matériau de support de catalyseur d'alumine dopé au bore, dans lequel la teneur en bore du matériau de support de catalyseur d'alumine dopé au bore synthétisé est de 1-5 % en poids.

2. Procédé de production selon la revendication 1, **caractérisé en ce que** l'étape d'addition dans la solution chauffée d'une solution de tétraborate de sodium décahydraté dissous dans de l'eau est effectuée par un procédé d'égouttage.

3. Procédé de production selon la revendication 1, **caractérisé en ce que**, dans l'étape de refroidissement du mélange additionné d'acide nitrique sous agitation pendant 1-6 heures à température ambiante pour obtenir un gel, on utilise un système condenseur.

4. Procédé de production selon la revendication 1, **caractérisé en ce que** l'on utilise comme alkoxyde d'aluminium de l'isopropoxyde d'aluminium.

5. Procédé de production selon la revendication 1, **caractérisé en ce que** l'alcool en C₁-C₄ est le méthanol.

6. Procédé de production selon la revendication 1, **caractérisé en ce que** l'alcool en C₁-C₄ est l'éthanol.

7. Procédé de production selon la revendication 1, **caractérisé en ce que** l'alcool en C₁-C₄ est le propanol.

8. Procédé de production selon la revendication 1, **caractérisé en ce que** l'alcool en C₁-C₄ est le butanol.

9. Procédé de production selon la revendication 7, **caractérisé en ce que** l'alcool en C₁-C₄ est le 1-propanol.

10. Procédé de production selon la revendication 1, **caractérisé en ce que** la source de bore est le tétraborate de sodium décahydraté.

11. Procédé de production selon la revendication 1, **caractérisé en ce que** la source de bore est le métaborate de sodium.

12. Procédé de production selon la revendication 1, **caractérisé en ce que** la source de bore est l'oxyde de bore.

13. Procédé de production selon la revendication 1, **caractérisé en ce que** la source de bore est l'acide borique.
